# EUROPÄISCHE PATENTSCHRIFT

(11) **EP 2 879 919 B1**
(45) Veröffentlichungstag und Bekanntmachung des Hinweises auf die Patenterteilung: **20.06.2018**
(21) Anmeldenummer: 13762053.0
(22) Anmeldetag: 02.08.2013
(51) Int. Cl.: B60S 1/08, G01N 21/55

(54) **DETEKTION VON REGENTROPFEN AUF EINER SCHEIBE MITTELS EINER KAMERA UND BELEUCHTUNG**
DETECTION OF RAIN DROPS ON A PLATE BY MEANS OF A CAMERA AND ILLUMINATION
DÉTECTION DE GOUTTES DE PLUIE SUR UNE VITRE AU MOYEN D'UNE CAMÉRA ET D'UN ÉCLAIRAGE

(30) Priorität: 06.08.2012 DE 102012107198; 07.09.2012 DE 102012108316; 11.01.2013 DE 102013100292
(43) Veröffentlichungstag der Anmeldung: 10.06.2015
(73) Patentinhaber: Conti Temic Microelectronic GmbH, 90411 Nürnberg (DE)
(72) Erfinder: KRÖKEL, Dieter, 88097 Eriskirch (DE); FEY, Wolfgang, 88131 Bodolz (DE); KOSUBEK, Christopher, 89073 Ulm (DE); RANDLER, Martin, 88090 Immenstaad (DE)
(86) Internationale Anmeldenummer: PCT/DE2013/200094
(87) Internationale Veröffentlichungsnummer: WO 2014/023307

(56) Entgegenhaltungen:
- WO-A1-2012/092911
- DE-A1-102010 023 593
- US-A1- 2003 001 121

## Beschreibung

Die Erfindung betrifft eine Vorrichtung und ein Verfahren zur Detektion von Regentropfen auf einer Scheibe mittels einer Beleuchtungsquelle und einer Kamera.

In der US 7,259,367 B2 wird mittels einer Kamera eine Regensensierung vorgeschlagen, die eine großflächige Beleuchtung des Durchtrittsfensters des Kameraöffnungswinkels mit der Scheibe vorsieht. Die Kamera ist nahezu auf unendlich fokussiert und damit gleichzeitig für Fahrerassistenzapplikationen nutzbar. Wegen der Abbildung auf den Fernbereich sind Regentropfen nur als Störungen im Bild bemerkbar, die durch aufwendige Differenzmessungen der mit in Synchronisation des Pixeltaktes gepulsten oder modulierten Lichtes aufgenommen Bildern detektiert werden.

In der WO 2012/092911 A1 werden eine Vorrichtung und ein Verfahren zur Erkennung von Regen beschrieben. Eine Kamera ist hinter einer Scheibe angeordnet, insbesondere im Inneren eines Fahrzeugs hinter einer Windschutzscheibe, und auf einen Fernbereich fokussiert, der vor der Scheibe liegt. Eine Beleuchtungsquelle zur Erzeugung mindestens eines auf die Scheibe gerichteten Lichtstrahls richtet den mindestens einen Lichtstrahl derart auf die Scheibe, dass mindestens ein von der Außenseite der Scheibe reflektierter Strahl als äußerer Lichtreflex bzw. Außenreflex auf die Kamera auftrifft. Die Lichtmenge des mindestens einen auf die Kamera auftreffenden Strahls bzw. Lichtreflexes kann von der Kamera gemessen werden kann. Zusätzlich kann die Beleuchtungsquelle den mindestens einen Lichtstrahl derart auf die Scheibe richten, dass die von der Innen- und Außenseite der Scheibe reflektierten Strahlen als mindestens zwei räumlich getrennte Strahlen auf die Kamera auftreffen. Die Lichtmengen der mindestens zwei auf die Kamera auftreffenden Strahlen (Außen- und Innenreflex) können hierbei von der Kamera gemessen werden. Der (direkt) an der Innenseite der Scheibe reflektierte Strahl, der auf die Kamera auftrifft, dient hierbei als Referenzsignal, da die Lichtmenge dieses Strahls bei An- oder Abwesenheit von Regentropfen auf der Außenseite der Scheibe konstant bleibt.
Zur Verminderung von Hintergrundeinflüssen und zur Verbesserung des Signal- zu Rauschabstandes wird eine zeitliche Modulation der Beleuchtung im Takt der Bildwiederholfrequenz vorgeschlagen.

Bei einer Modulation von 100% bedeutet dies, dass ein Bild voll beleuchtet wird und das nächste Bild unbeleuchtet ist. Wenn sich die Szene zwischen den beiden Aufnahmen nicht ändert, wird durch die Subtraktion der beiden Bilder eine vollständige Reduktion der Hintergrundeinflüsse erreicht, so dass nur das von der Windschutzscheibe reflektierte Licht für die Auswertung übrig bleibt.

Die idealisierte Annahme eines unveränderten Hintergrundes zwischen zwei Aufnahmen trifft in der Praxis allerdings nur begrenzt zu. Beim Fahren, insbesondere bei Kurvenfahrten, tritt eine mehr oder weniger starke Veränderung des Hintergrundes auf, wodurch der Hintergrundeinfluss nur unzureichend kompensiert wird. Er überlagert sich dem eigentlichen Regensignal und kann daher zu Fehlauswertungen des Regensignals führen. Um Fehlauslösungen des Wischers zu vermeiden, kann zwar die Schwelle zur Detektion einer benetzten Windschutzscheibe mit ausreichend Toleranz versehen werden, dies führt aber unvermeidlich zu einem entsprechend unempfindlicheren Verhalten.

In der DE 602 04 567 T2 ist ein überlappend mosaikartig abbildender Regensensor gezeigt, der eine Beleuchtungseinrichtung zum Beleuchten eines Glases mit Lichtstrahlen einer ersten Wellenlänge umfasst und ein beleuchtetes Bild einer ersten Wellenlänge sowie ein Umgebungsbild aus Lichtstrahlen einer zweiten Wellenlänge gleichzeitig einfangen und zur Erzeugung eines Feuchtesignals miteinander vergleichen kann. Anstelle von RGB-Farbfiltern wird eine mosaik- oder streifenförmige Matrix von Infrarot-Bandpassfiltern verwendet.

Aufgabe der vorliegenden Erfindung ist es, die genannten Schwierigkeiten der aus dem Stand der Technik bekannten Vorrichtungen bzw. Verfahren zu überwinden.

Ausgangspunkt der Lösung ist die Verwendung von Bildsensoren mit Farbfiltern. Weit verbreitet ist das Bayer Muster, das die drei Grundfarben Grün, Rot, Blau als Farbfilter in der bekannten Anordnung Rot - Grün - Grün - Blau verwendet. Eine Beleuchtung im sichtbaren Wellenlängenbereich bietet den Vorteil, dass übliche Fahrerassistenzkameras mit Farbauflösung diesen Spektralbereich vollständig erfassen können, während dagegen infrarotes Licht in aller Regel die zur optimierten Farbauflösung üblichen Infrarotsperrfilter nicht passiert und somit von diesen Fahrerassistenzkameras nicht detektiert werden kann.

Eine erfindungsgemäße Vorrichtung zur Erkennung von Regen umfasst eine Kamera mit einem Bildsensor und Farbfiltern für Pixel des Bildsensors in mehreren Filter-Grundfarben und eine Beleuchtungsquelle zur Erzeugung von einfarbigem Licht einer ersten Filter-Grundfarbe. Das einfarbige Licht befindet sich in einem sichtbaren Wellenlängenbereich, der von der ersten Filter-Grundfarbe transmittiert wird und von den anderen Filter-Grundfarben geblockt wird. Die Filter-Grundfarben liegen vorzugsweise in unterschiedlichen sichtbaren Wellenlängenbereichen. Das Licht der Beleuchtungsquelle liegt in einem Wellenlängenbereich, der an eine erste Filter-Grundfarbe angepasst ist. Dies ermöglicht die Verwendung von herkömmlichen farbauflösenden Kameras. Die Kamera umfasst bevorzugt einen Infrarotsperrfilter, so dass kein Infrarotlicht vom Bildsensor erfasst werden kann.
Die Kamera und die Beleuchtungsquelle sind derart ausgebildet und angeordnet, dass die Kamera ein Signal vom einfarbigen Licht erfassen kann, mit dem die Beleuchtungsquelle eine Scheibe beleuchtet. Insbesondere korreliert dabei das von der Kamera detektierte Signal mit an der Scheibeninnen- bzw. -außenseite und/oder am Regentropfen reflektierten und/oder gestreuten einfarbigem Licht der Beleuchtungsquelle.

Die Kamera ist vorzugsweise hinter der Scheibe angeordnet, insbesondere im Inneren eines Fahrzeugs z.B. hinter einer Windschutzscheibe.
Bevorzugt umfasst die Kamera einen Bildsensor, z.B. einen CCD- oder CMOS-Sensor, und ein Objektiv zur Fokussierung elektromagnetischer Strahlung auf den Bildsensor. Vorteilhaft ist die Kamera auf unendlich bzw. einen Fernbereich fokussiert, der vor der Scheibe liegt.

Die Beleuchtungsquelle zur Erzeugung von einfarbigem Licht richtet den mindestens einen Lichtstrahl bevorzugt derart auf die Scheibe, dass mindestens ein von der Außenseite der Scheibe reflektierter Strahl (bzw. Teilstrahl des auf die Scheibe gerichteten Lichtstrahls) auf die Kamera auftrifft, der vorzugsweise nicht von Teilstrahlen, die an der Innenseite der Scheibe reflektiert werden, überlagert auf die Kamera auftrifft.
Die Beleuchtungsquelle kann als eine oder mehrere Leuchtdioden (LED) oder als ein Lichtband ausgebildet sein.
Der Beleuchtungsreflex des mindestens einen auf die Kamera auftreffenden einfarbigen Strahls kann von der Kamera detektiert werden.

In einer bevorzugten Ausführungsform richtet die Beleuchtungsquelle den mindestens einen einfarbigen Lichtstrahl derart auf die Scheibe, dass die von der Innen- und Außenseite der Scheibe reflektierten Strahlen als mindestens zwei räumlich getrennte Strahlen auf die Kamera auftreffen. Es ist insbesondere für den an der Innenseite reflektierten Strahl nicht erforderlich, dass die Strahlen vollständig auf dem Bildsensor der Kamera abgebildet sind. Die einfarbigen Beleuchtungsreflexe der mindestens zwei auf die Kamera auftreffenden Strahlen können hierbei von der Kamera räumlich separat detektiert werden.
Der (direkt) an der Innenseite der Scheibe reflektierte Strahl, der auf die Kamera auftrifft, dient hierbei bevorzugt als ein mögliches Referenzsignal, da die Lichtmenge dieses Strahls bei An- oder Abwesenheit von Regentropfen auf der Außenseite der Scheibe konstant bleibt.

Ein Grundgedanke der Erfindung liegt darin, mit einfarbigem z.B. mit blauem Licht zu beleuchten. Dadurch wird erreicht, dass nur auf den entsprechenden (blauen) Pixeln ein Regen- oder Benetzungs-abhängiges Signal detektiert werden kann, da die roten und grünen Pixel für blaues Licht nicht transparent sind.

Dies bietet den Vorteil, dass eine zeitgleiche Aufnahme des Hintergrundes durchgeführt wird, der aus den benachbarten nicht-blauen Pixeln pixelgenau ermittelt werden kann.

Die Erfindung betrifft weiterhin ein Verfahren zur Erkennung von Regen mit einer Kamera, wobei die Kamera einen Bildsensor und Farbfilter für Bildpixel des Bildsensors in mehreren Filter-Grundfarben umfasst.
Von einer Beleuchtungsquelle wird einfarbiges Licht einer ersten Filterfarbe erzeugt. Mit dem einfarbigen Licht wird eine Scheibe derart beleuchtet, dass die Kamera ein Signal von diesem einfarbigen Licht erfassen kann.

In einer vorteilhaften Ausführungsform wird die Helligkeit eines ersten Bildsensorpixels der ersten Filter-Grundfarbe ermittelt. Zusätzlich werden die Helligkeiten der Pixel ermittelt, die das erste Bildsensorpixel umgeben und die eine andere als die erste Filterpixelfarbe aufweisen. Aus der ermittelten Helligkeit der Pixel, die das erste Bildsensorpixel umgeben und die eine andere als die erste Filterpixelfarbe aufweisen, wird eine Hintergrundhelligkeit des ersten Bildsensorpixels bestimmt.

Das erlaubt eine pixelgenaue Berücksichtigung des Hintergrundsignals. Dadurch wird eine deutlich verbesserte räumliche Auflösung des Benetzungssignals erreicht.

Bevorzugt wird gleichzeitig die Helligkeit der acht roten und grünen Pixel gemessen, die ein blaues Pixel umgeben. Deren Helligkeit wird ausschließlich durch den Hintergrund beeinflusst. Aus der Helligkeit dieser Pixel wird nun z.B. über Mittelwertbildung das Hintergrundsignal des blauen Pixels abgeschätzt. Alternativ kann der Rot- und Grünanteil noch unterschiedlich gewichtet werden, um eine bestimmte Spektralverteilung des Hintergrundes zu berücksichtigen.

Dieser Hintergrundwert kann bevorzugt nochmals geeignet gewichtet werden, da nur der Blauanteil des Hintergrundes von dem Signal der blauen Pixel abgezogen werden soll.

Die Anteilsfaktoren für die geeigneten Gewichtungen können z.B. empirisch ermittelt werden. Es zeigt sich, dass für viele Szenarien mit einigermaßen gleichverteilten Spektralverteilungen der blaue Hintergrundanteil gut abgeschätzt werden kann.

Überwiegt jedoch eine Farbe im Hintergrund, z.B. rot, so würde auch ein zu hoher Blauanteil für das blaue Pixel abgezogen werden. Eine derartige Verschiebung in der Spektralverteilung kann aber schon über das Rot- zu Grünverhältnis bestimmt werden und in der Gewichtung der Faktoren berücksichtigt werden.

Zusätzlich können diese Gewichtungsfaktoren über eine weitere Messung im unbeleuchteten Zustand verifiziert oder entsprechend nachgeführt werden. Da diese Messung über zeitlich versetzte Aufnahmen geschieht, sollte hierfür sicher gestellt sein, dass sich der Hintergrund kaum oder nur wenig verändert (z.B. im Stand). Alternativ könnte über Bildverarbeitungstechnische Methoden der betrachtete Ausschnitt zeitlich verfolgt werden ("Tracking"), um so einen möglichst unverfälschten Hintergrund für die Faktorenberechnung zu erhalten.

Anstatt blaues Licht für die Beleuchtung zu verwenden, könnte vorteilhaft auch rotes Licht bei gleichem Pixel-Farbmuster verwendet werden. Die Berechnung des Hintergrundes verläuft dann analog über die blauen und grünen Pixel.

Bei einer alternativen Verwendung von grünem Licht als Beleuchtung müsste der Hintergrund aus den jeweils zwei blauen und zwei roten unmittelbar benachbarten Pixeln erfolgen.

In einer bevorzugten Ausführungsform ist die Verwendung von anderen Farbmustern anstelle des Bayer-Filters vorgesehen, konkret ist sogar ein Farbfilter mit nur zwei Grundfarben (z.B. rot und blau) für ein erfindungsgemäßes Verfahren ausreichend.

Besonders vorteilhaft für eine gute, zeitgleiche Berücksichtigung des Hintergrundes, ist die Verwendung eines Farbmusters, bei dem eine Farbe eine hohe Transmission für die verwendete Beleuchtung aufweist und gleichzeitig die Beleuchtung auf den anderen Farbpixeln gut geblockt wird.

Gemäß einer bevorzugten Weiterbildung der Erfindung wird eine Normierung eines aktuellen, hintergrundbereinigten Messsignals auf ein hintergrundbereinigtes Messsignal bei einer trockenen Scheibe durchgeführt. Die Normierung kann für jeden (z.B. blauen) Pixel insbesondere als Division der aktuellen, hintergrundbereinigten Intensität des Pixels durch die hintergrundbereinigte Intensität desselben Pixels bei trockener Scheibe erfolgen. Die hintergrundbereinigte Intensität bei trockener Scheibe kann im Rahmen einer Erstkalibrierung ermittelt und abgespeichert werden oder auch von Zeit zu Zeit automatisch nachkalibriert werden, wenn eine trockene Scheibe erkannt wird.

Ein unbeeinflusstes Referenzsignal (das einer trockenen Scheibe entspricht) kann auch jederzeit nach dem gleichen Verfahren aus dem Reflexbild von der Scheibeninnenseite (WO 2012/092911 A1) gewonnen werden. Es unterscheidet sich - solange auch das äußere Reflexbild unbeeinflusst ist - nur durch eine höhere Intensität gegenüber dem äußeren Reflexbild. Dieser Faktor ist konstant und kann daher nach einmaliger Bestimmung bei der Verhältnisbildung berücksichtigt werden.

Im Folgenden wird die Erfindung anhand von Figuren und Ausführungsbeispielen näher erläutert.

Es zeigen:
Fig. 1 eine Farbfilteranordnung nach Bayer;
Fig. 2 die Benutzung der ein blaues Pixel umgebenden roten und grünen Pixel, um das Hintergrundsignal des blauen Pixels zu berechnen;
Fig. 3 schematisch das Grundprinzip einer möglichen Anordnung von Beleuchtungsquelle und Kamera mit Strahlengängen bei Regen auf der Scheibe;
Fig. 4 von einem Bildsensor einer Kamera detektierte Signale, die auf Regen schließen lassen;
Fig. 5 eine räumliche Verteilung des Beleuchtungsflecks nach Subtraktion des Hintergrundsignals für eine trockene Scheibe;
Fig. 6 eine räumliche Signalverteilung nach Subtraktion des Hintergrundsignals bei Benetzung der Scheibe durch einen kleinen Regentropfen von weniger als 1mm Durchmesser und
Fig. 7 die Signalverteilung aus Fig. 6 normiert auf die unbeeinflusste Signalverteilung aus Fig. 5.

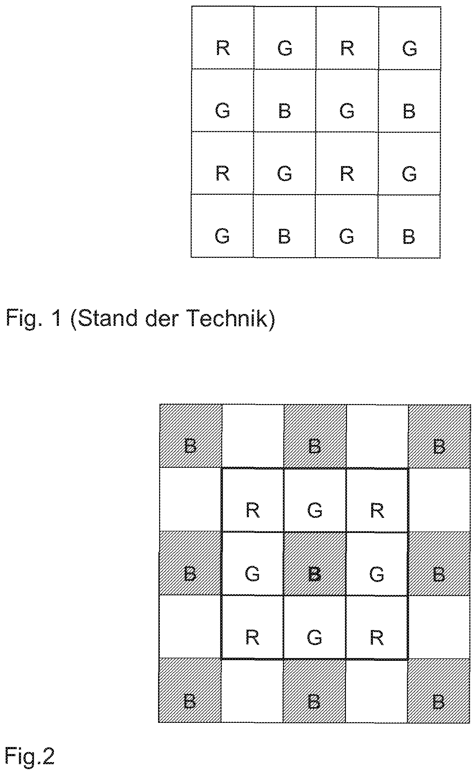

Weit verbreitet als Farbfilter für Bildsensoren ist das in Fig. 1 dargestellte Bayer Muster (bzw. Pattern) aus der US-Patentschrift 3971065, das die drei Grundfarben Grün (G), Rot (R), Blau (B) als Farbfilter in der Anordnung rot - grün - grün - blau (RGGB) als Filterpixelmatrix verwendet.

Anhand von Fig. 2, die einen Ausschnitt eines Bayer-Patterns zeigt, wird eine erste Ausführungsform der Erfindung näher erläutert.

Um eine zeitgleiche Aufnahme des Hintergrundes zu erreichen, wird mit blauem Licht beleuchtet. Dadurch wird erreicht, dass nur auf den blauen Pixeln (B, schraffiert) ein regen- oder benetzungsabhängiges Signal detektiert werden kann, da die roten (R) und grünen (G) Pixel für blaues Licht nicht transparent sind.

Gleichzeitig wird die Helligkeit der ein blaues Pixel umgebenden acht roten (R) und grünen (G) Pixel gemessen. In Fig. 2 also die Helligkeiten der vier roten (R) und vier grünen (G) Pixel, die das zentrale blaue Pixel (**fettes B**) umgeben (innerhalb der dickeren Gitterlinien). Deren Helligkeit wird ausschließlich durch den Hintergrund beeinflusst. Aus der Helligkeit dieser Pixel wird nun z.B. über Mittelwertbildung das Hintergrundsignal des blauen Pixels (**B**) abgeschätzt. Alternativ kann der Rot- und Grünanteil noch unterschiedlich gewichtet werden, um eine bestimmte Spektralverteilung des Hintergrundes zu berücksichtigen.

Dieser Hintergrundwert wird nochmals geeignet gewichtet, da nur der Blauanteil des Hintergrundes von dem Signal der blauen Pixel (B) abgezogen werden soll.

Diese Faktoren können z.B. empirisch ermittelt werden. Es zeigt sich, dass für viele Szenarien mit einigermaßen gleichverteilten Spektralverteilungen der blaue Hintergrundanteil gut abgeschätzt werden kann.

Überwiegt jedoch eine Farbe im Hintergrund, z.B. Rot, so würde auch ein zu hoher Blauanteil für das blaue Pixel (B) abgezogen werden. Eine derartige Verschiebung in der Spektralverteilung kann aber schon über das Rot- zu Grünverhältnis bestimmt werden und in der Gewichtung der Faktoren berücksichtigt werden.

Zusätzlich können diese Gewichtungsfaktoren über eine weitere Messung im unbeleuchteten Zustand verifiziert oder entsprechend nachgeführt werden. Da diese Messung über zeitlich versetzte Aufnahmen geschieht, sollte hierfür sicher gestellt sein, dass sich der Hintergrund kaum oder nur wenig verändert (z.B. im Stand). Alternativ könnte über Bildverarbeitungstechnische Methoden der betrachtete Ausschnitt zeitlich verfolgt werden ("Tracking"), um so einen möglichst unverfälschten Hintergrund für die Faktorenberechnung zu erhalten.

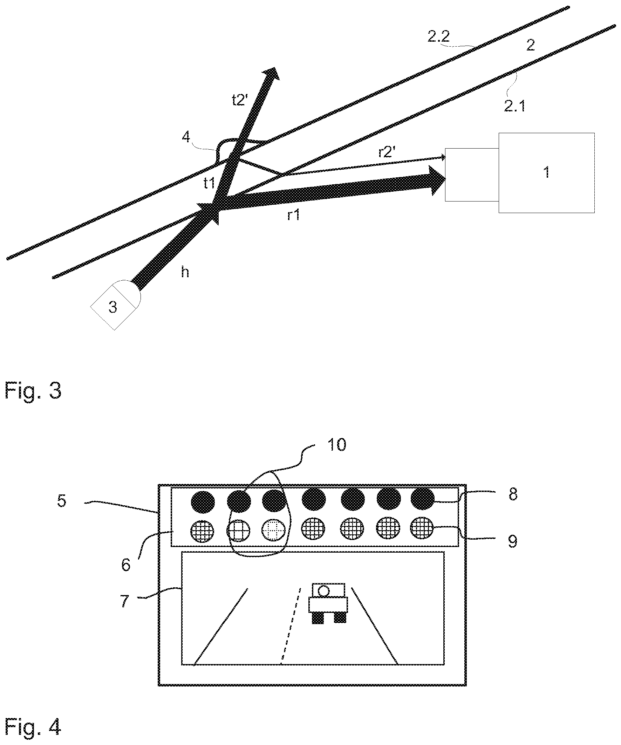

Fig. 3 zeigt eine auf den Fernbereich fokussierte Kamera (1) und eine Beleuchtung (3), die einen oder mehrere blaufarbige Strahlen (h) erzeugt.

Ein von einer Beleuchtungsquelle (3) erzeugter Lichtstrahl (h) wird so auf eine Scheibe (2) gerichtet, dass die von der Innen- (2.1) und Außenseite (2.2) der Scheibe reflektierten Strahlen als zwei räumlich getrennte Strahlen (r1, r2') auf das Objektiv bzw. die Kamera (1) auftreffen. Wegen der Fokussierung auf den Fernbereich wird die Umrandung der Strahlenbündel nur unscharf auf den Bildchip (5) abgebildet. Aber beide Strahlen (r1, r2') sind ausreichend getrennt und ihre jeweiligen Beleuchtungsreflexe sind mit dem Bildsensor (5) detektierbar.

Bei dieser Ausführungsform wird der Hauptstrahl (h) der Beleuchtungsquelle (3) verwendet, daher kann das Licht der Beleuchtungsquelle vorzugsweise gebündelt sein. Der an der Luft-Scheibe-Grenzfläche (bzw. Scheibeninnenseite (2.1)) reflektierte Anteil (r1) des Hauptstrahls dient als Referenzstrahl. Vom Anteil, der in die Scheibe transmittiert (t1) wird, dient der Anteil als Messstrahl (r2'), der an der Scheibe-Regentropfen-Grenzfläche (bzw. Scheibenaußenseite (2.2)) reflektiert wird und auf die Kamera (1) trifft. Nicht dargestellt ist der Anteil des Strahls, der mehrfach innerhalb der Scheibe (2) reflektiert wird (an der Innenseite (2.1) Scheibe-Luft, nachdem er an der Außenseite (2.2) Scheibe-Regentropfen reflektiert wurde).

Wenn wie hier dargestellt im Regenfall (4) die Außenseite (2.2) der Windschutzscheibe (2) benetzt ist, wird der überwiegende Teil des Lichts (t1) ausgekoppelt, so dass der reflektierte Anteil (r2') entsprechend geschwächt wird (siehe Fig. 2). Der von der Innenseite (2.1) reflektierte Strahl (r1) ist davon unbeeinflusst.

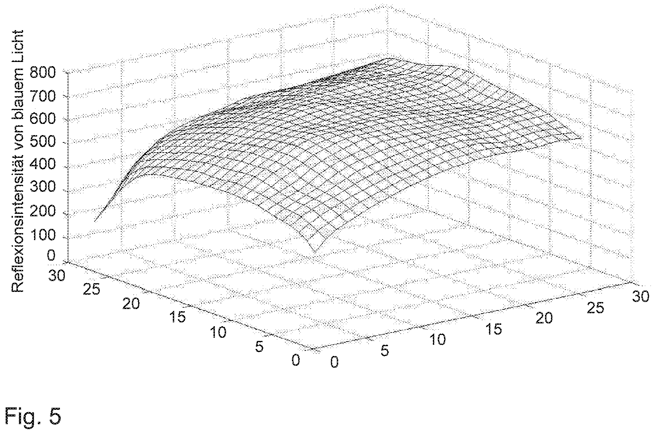

Durch den Vergleich der detektierten Beleuchtungsreflexe (8; 9) beider Strahlen (r1 zu r2') kann so bei Kenntnis des konstanten Verhältnisses beider Beleuchtungsreflexsignale zueinander das im Regenfall (4) verminderte Signal (r2') gemessen werden und ein Scheibenwischer entsprechend angesteuert werden.
Wie Regen auch zuverlässig nur durch Auswertung des Beleuchtungsreflexes (9) von der Außenseite (2.2) der Scheibe (2) bestimmt werden kann, wird später anhand von Fig. 5 bis 7 erläutert.

Die Kamera verfügt über einen Bayer-Farbfilter wie in Fig. 1 und die gemessenen Signale werden wie anhand von Fig. 2 beschrieben ausgewertet.

Fig. 4 zeigt im oberen Teil (6) des Bildsensors (5), der der Regenerkennung dient, jeweils sieben Paare von Beleuchtungsreflexen (8, 9), die z.B. von sieben blauen LEDs als Beleuchtungsquelle (3) erzeugt werden. Diese sind aufgrund der auf unendlich fokussierten Kamera (1) nicht scharf abgebildet aber wahrnehmbar. Insbesondere kann die Lichtintensität gemessen werden. Die oberen Beleuchtungsreflexe (8) werden von an der Innenseite (2.1) der Windschutzscheibe (2) reflektierten Strahlen (r1) erzeugt, die unteren (9) von an der Außenseite der Windschutzscheibe reflektierten Strahlen (r2') erzeugt.

Fig. 4 zeigt somit eine beispielhafte Aufteilung des Fahrerassistenzbereiches (7) und des Regensensorbereiches (6) auf dem Bildchip (5). Die Beleuchtungsreflexe von der äußeren Windschutzscheibe (9), über denen ein Regentropfen (4) liegt, sind in der Intensität abgeschwächt. Diese Beleuchtungsreflexe (9) stammen von an der Außenseite (2.2) der Windschutzscheibe (2) reflektierten Strahlen (r2') und sind von verringerter Intensität, weil ein Großteil des in die Windschutzscheibe (2) transmittierten Strahls (t1) durch Regentropfen (4) aus der Windschutzscheibe ausgekoppelt (t2') und somit nicht zurück zur Kamera (1) reflektiert (r2') wird. Diese Beleuchtungsreflexe (9) tragen also die Information in sich, ob Regen (4) auf der Außenseite (2.2) der Scheibe (2) vorliegt, und deren Lichtmenge kann alleine als Messsignal verwendet werden.

Wie in Fig. 5 bis 7 dargestellt ist, können nach pixelgenauer Subtraktion des Hintergrundes (vgl. die Erläuterungen anhand von Fig. 2) und einer Normierung auf das unbeeinflusste Signal (bei trockener Scheibe) kleinste Regentropfen nachgewiesen werden.
Fig. 5 zeigt bei einer trockenen Scheibe eine räumliche Verteilung eines Beleuchtungsflecks (9; Messsignale der blauen Pixel) nach pixelgenauer Subtraktion des Hintergrundsignals (jeweils ermittelt aus den jedes blaue Pixel umgebenden grünen und roten Pixel). Die Reflexionsintensität von blauem Licht einzelner blauer Pixel ist hierbei in willkürlichen Einheiten im Bereich 0 bis 800 aufgetragen für zwei Bildkoordinaten in willkürlichen Einheiten (jeweils von 0 bis 30). Fig. 5 stellt somit ein realistisches Ausgangssignal für eine trockene Scheibe dar.

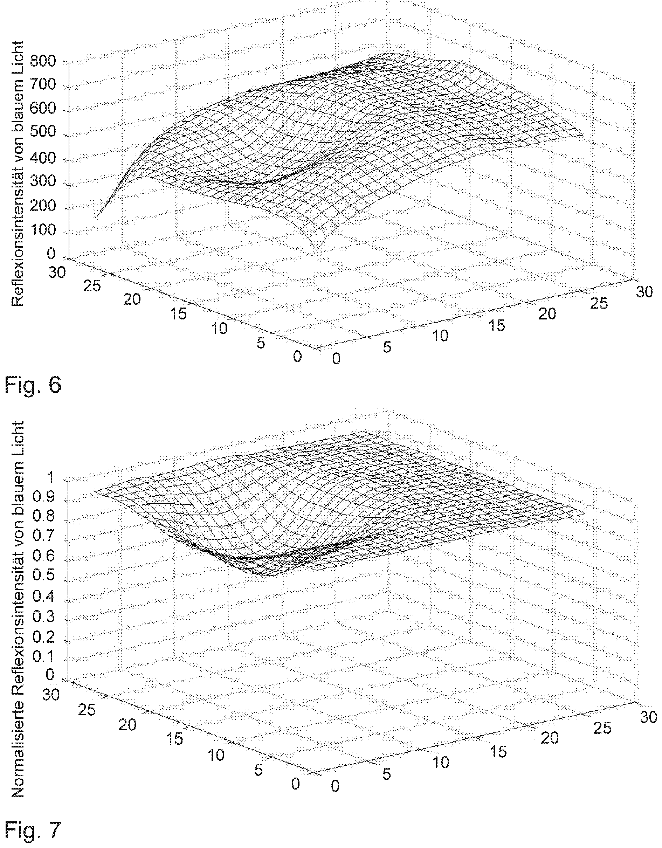

Eine Signalverminderung aufgrund einer Benetzung der Scheibe mit Regentropfen ist abhängig von der Größe und Dicke der benetzten Fläche. Fig. 6 zeigt eine entsprechend verminderte räumliche Signalverteilung (in gleicher Auftragung wie Fig. 5) des Beleuchtungsflecks (9) bei einer Benetzung der Scheibe durch einen kleinen Regentropfen (4) von weniger als 1mm Durchmesser.
Über eine Berechnung der Veränderung des von der "Intensitätslandschaft" überdeckten Volumens aus Fig. 6 gegenüber dem von der unbeeinflussten Signalverteilung aus Fig. 5 überdeckten Volumen kann nicht nur empfindlich auf kleinste Regentropfen reagiert werden, sondern auch auf die Art des Regens (Größe der Tropfen) oder Benetzung und auf die Regenmenge geschlossen werden.

Fig. 7 zeigt die Signalverteilung aus Fig. 6, die auf die unbeeinflusste Signalverteilung aus Fig. 5 normiert wurde. Die normierte Reflexionsintensität von blauem Licht ist hier einheitenfrei im Bereich von 0 bis 1 aufgetragen. Hier ist die Signalauswirkung des kleinen Regentropfens (4) als symmetrische Ausbuchtung (der normierte Minimalwert liegt bei ca. 0.6 bis 0.7) sehr schön zu sehen. Dort, wo kein Regentropfen (4) den Beleuchtungsstrahl (h) beeinflusst, liegt der normierte Intensitätswert ungefähr bei 1.

### Bezugszeichenliste

- 1: Kamera
- 2: Scheibe
- 2.1: Innenseite der Scheibe
- 2.2: Außenseite der Scheibe
- 3: Beleuchtungsquelle
- 4: Regen, Regentropfen
- 5: Bildsensor
- 6: Regensensorbereich
- 7: Fahrerassistenzbereich
- 8: Beleuchtungsreflex von Scheibeninnenseite
- 9: Beleuchtungsreflex von Scheibenaußenseite
- 10: Signalveränderung bei Regentropfen
- h: Strahl
- r1: Anteil von h, der an der Scheibeninnenseite reflektiert wird
- t1: Anteil von h, der an der Scheibeninnenseite transmittiert wird
- r2': Anteil von t1, der an der Scheibenaußenseite reflektiert wird (bei Regen)
- t2': Anteil von t1, der an der Scheibenaußenseite transmittiert wird (bei Regen)
- R: Filterelement, das Licht im roten Wellenlängenbereich durchlässt
- G: Filterelement, das Licht im grünen Wellenlängenbereich durchlässt
- B: Filterelement, das Licht im blauen Wellenlängenbereich durchlässt

## Patentansprüche

1. Vorrichtung zur Erkennung von Regen (4) umfassend
- eine Kamera mit einem Bildsensor und Farbfiltern für Pixel des Bildsensors (5) in mehreren Filter-Grundfarben (R; G; B), wobei die Filter-Grundfarben (R; G; B) im sichtbaren Wellenlängenbereich liegen, und
- eine Beleuchtungsquelle (3) zur Erzeugung von einfarbigem Licht (h), das sich in einem sichtbaren Wellenlängenbereich befindet, der von der ersten Filter-Grundfarbe transmittiert wird und von den anderen Filter-Grundfarbe geblockt wird,
- wobei die Kamera und die Beleuchtungsquelle (3) derart ausgebildet und angeordnet sind, dass die Kamera ein Signal vom einfarbigen Licht (r1, r2') erfassen kann, mit dem die Beleuchtungsquelle (3) eine Scheibe (2) beleuchtet.

2. Vorrichtung nach Anspruch 1, wobei die Kamera hinter einer Scheibe (2) angeordnet und auf einen Fernbereich fokussiert ist, der vor der Scheibe (2) liegt.

3. Vorrichtung nach Anspruch 2, wobei die Beleuchtungsquelle (3) zur Erzeugung von einfarbigem Licht mindestens einen einfarbigen Lichtstrahl (h) derart auf die Scheibe (2) richtet, dass mindestens ein von der Außenseite (2.2) der Scheibe (2) reflektierter Strahl (r2') auf den Bildsensor (5) der Kamera auftrifft.

4. Vorrichtung nach Anspruch 3, wobei der mindestens eine von der Außenseite (2.2) der Scheibe (2) reflektierte Strahl (r2') nicht von Strahlen (r1), die an der Innenseite (2.1) der Scheibe (2) reflektiert werden, überlagert auf den Bildsensor (5) der Kamera auftrifft.

5. Vorrichtung nach Anspruch 3 oder 4, wobei die Beleuchtungsquelle (3) den mindestens einen einfarbigen Lichtstrahl (h) derart auf die Scheibe (2) richtet, dass die von der Innen- (2.1) und Außenseite (2.2) der Scheibe reflektierten Strahlen als mindestens zwei räumlich getrennte Strahlen (r1 und r2') auf den Bildsensor (5) der Kamera auftreffen.

6. Vorrichtung nach einem der vorhergehenden Ansprüche, wobei als Farbfilter für die Pixel des Bildsensors (5) Transmissionsfilter in zwei unterschiedlichen Grundfarben vorgesehen sind.

7. Vorrichtung nach Anspruch 6, wobei die Transmissionsfilter in den beiden Grundfarben rot (R) und blau (B) vorgesehen sind.

8. Vorrichtung nach einem der vorhergehenden Ansprüche, wobei die Farbfilter für die Pixel des Bildsensors (5) Transmissionsfilter für die drei Grundfarben rot (R), grün (G) und blau (B) sind.

9. Vorrichtung nach Anspruch 7 oder 8, wobei die Beleuchtungsquelle (3) Licht (h) im blauen Wellenlängenbereich erzeugt.

10. Vorrichtung nach Anspruch 8, wobei die Beleuchtungsquelle (3) Licht (h) im grünen Wellenlängenbereich erzeugt.

11. Vorrichtung nach einem der vorhergehenden Ansprüche, wobei die Kamera (1) einen Infrarotsperrfilter umfasst, so dass kein Infrarotlicht vom Bildsensor (5) erfasst werden kann.

12. Verfahren zur Erkennung von Regen (4) mit einer Kamera (1), wobei die Kamera einen Bildsensor und Farbfilter für Bildpixel des Bildsensors in mehreren Filter-Grundfarben (R; G; B), wobei die Filter-Grundfarben (R; G; B) im sichtbaren Wellenlängenbereich liegen, umfasst,
von einer Beleuchtungsquelle (3) einfarbiges Licht (h) erzeugt wird, das sich in einem sichtbaren Wellenlängenbereich befindet, der von der ersten Filter-Grundfarbe transmittiert wird und von den anderen Filter-Grundfarbe geblockt wird, und
mit dem einfarbigen Licht (h) eine Scheibe (2) derart beleuchtet wird, dass die Kamera ein Signal von diesem einfarbigen Licht (r1, r2') erfassen kann.

13. Verfahren nach Anspruch 12, wobei
die Helligkeit eines ersten Bildsensorpixels der ersten Filter-Grundfarbe ermittelt wird,
die Helligkeiten der Pixel ermittelt werden, die das erste Bildsensorpixel umgeben und die eine andere als die erste Filterpixelfarbe aufweisen, und
eine Hintergrundhelligkeit des ersten Bildsensorpixels bestimmt wird aus der ermittelten Helligkeit der Pixel, die das erste Bildsensorpixel umgeben und die eine andere als die erste Filterpixelfarbe aufweisen.

14. Verfahren nach Anspruch 12 oder 13, wobei zur Bestimmung der Hintergrundhelligkeit ein Mittelwert der Helligkeiten der Pixel ermittelt wird, die das erste Bildsensorpixel umgeben und die eine andere als die erste Filterpixelfarbe aufweisen.

15. Verfahren nach einem der Ansprüche 12 bis 14, wobei zur Bestimmung der Hintergrundhelligkeit die Helligkeiten der umgebenden Pixel, die eine zweite Filtergrundfarbe aufweisen, anders gewichtet werden als die Helligkeiten der umgebenden Pixel, die eine dritte Filtergrundfarbe aufweisen, um eine bestimmte Spektralverteilung des Hintergrunds zu berücksichtigen.

16. Verfahren nach Anspruch 14 oder 15, wobei aus dem gemittelten oder gewichteten Wert der Helligkeit der umgebenden Pixel nur der Farbanteil der ersten Filtergrundfarbe von der ermittelten Helligkeit des ersten Bildsensorpixels (der ersten Filter-Grundfarbe) abgezogen wird, um die Hintergrundhelligkeit zu eliminieren.

17. Verfahren nach einem der Ansprüche 12 bis 16, wobei eine Normierung eines aktuellen, hintergrundbereinigten Messsignals auf ein hintergrundbereinigtes Messsignals bei einer trockenen Scheibe (2) durchgeführt wird.

## Claims

1. A device for detecting rain (4) comprising
- a camera with an image sensor and colour filters for pixels of the image sensor (5) in several filter primary colours (R; G; B), wherein the filter primary colours (R; G; B) are in the visible wavelength range, and
- an illumination source (3) for generating monochrome light (h) that is in a visible wavelength range transmitted by the first filter primary colour and blocked by the other filter primary colours,
- wherein the camera and the illumination source (3) are designed and arranged in such a manner that the camera can detect a signal of the monochrome light (r1, r2') with which the illumination source (3) illuminates a pane (2).

2. The device according to claim 1, wherein the camera is arranged behind a pane (2) and focussed on a far range in front of the pane (2).

3. The device according to claim 2, wherein the illumination source (3) for generating monochrome light directs at least one monochrome light beam (h) to the pane (2) in such a manner that at least one beam (r2') reflected from the outer surface (2.2) of the pane (2) impinges on the image sensor (5) of the camera.

4. The device according to claim 3, wherein the at least one beam (r2') reflected from the outer surface (2.2) of the pane (2) impinges on the image sensor (5) of the camera while not being superimposed by beams (r1) reflected from the inner surface (2.1) of the pane (2).

5. The device according to claim 3 or 4, wherein the illumination source (3) directs the at least one monochrome light beam (h) to the pane (2) in such a manner that the beams reflected from the inner (2.1) and outer surfaces (2.2) of the pane impinge on the image sensor (5) of the camera in the form of at least two spatially divided beams (r1 and r2').

6. The device according to any one of the preceding claims, wherein transmission filters in two different primary colours are provided as colour filters for the pixels of the image sensor (5).

7. The device according to claim 6, wherein the transmission filters are provided in the two primary colours red (R) and blue (B) .

8. The device according to any one of the preceding claims, wherein the colour filters for the pixels of the image sensor (5) are transmission filters for the three primary colours red (R), green (G), and blue (B).

9. The device according to claim 7 or 8, wherein the illumination source (3) generates light (h) in the blue wavelength range.

10. The device according to claim 8, wherein the illumination source (3) generates light (h) in the green wavelength range.

11. The device according to any one of the preceding claims, wherein the camera (1) comprises an infrared barrier filter so that no infrared light can be detected by the image sensor (5).

12. A method for detecting rain (4) by means of a camera (1), wherein the camera comprises an image sensor and colour filters for image pixels of the image sensor in several filter primary colours (R; G; B), wherein the filter primary colours (R; G; B) are in the visible wavelength range,
monochrome light (h) that is in a visible wavelength range transmitted by the first filter primary colour and blocked by the other filter primary colours is generated by an illumination source (3), and
a pane (2) is illuminated with the monochrome light (h) in such a manner that the camera can detect a signal of said monochrome light (r1, r2').

13. The method according to claim 12, wherein
the brightness of a first image sensor pixel of the first filter primary colour is determined,
the brightnesses of those pixels which surround the first image sensor pixel and have a filter pixel colour other than the first one are determined, and
a background brightness of the first image sensor pixel is determined from the determined brightness of those pixels which surround the first image sensor pixel and have a filter pixel colour other than the first one.

14. The method according to claim 12 or 13, wherein for determining background brightness, an average value of the brightnesses of those pixels which surround the first image sensor pixel and have a filter pixel colour other than the first one is determined.

15. The method according to any one of claims 12 to 14, wherein for determining background brightness, the brightnesses of the surrounding pixels having a second filter primary colour are weighted differently from the brightnesses of the surrounding pixels having a third filter primary colour in order to take a particular spectral distribution of the background into account.

16. The method according to claim 14 or 15, wherein from the averaged or weighted value of the brightness of the surrounding pixels, only the component of colour of the first filter primary colour is subtracted from the determined brightness of the first image sensor pixel (the first filter primary colour) in order to eliminate background brightness.

17. The method according to any one of claims 12 to 16, wherein a normalisation of a current background-corrected measuring signal is performed in relation to a background-corrected measuring signal that occurs with a dry pane (2).

## Revendications

1. Dispositif pour la détection de pluie (4), comprenant
- une caméra avec un capteur d'images et des filtres de couleurs pour des pixels du capteur d'images (5) dans plusieurs couleurs primaires de filtre (R ; V ; B), les couleurs primaires de filtre (R ; V ; B) se trouvant dans la gamme de longueurs d'ondes visible, et
- une source d'éclairage (3) pour la génération de lumière monochrome (h) se trouvant dans une gamme de longueurs d'ondes visible, laquelle est transmise par la première couleur primaire de filtre et est bloquée par les autres couleurs primaires de filtre,
- la caméra et la source d'éclairage (3) étant conçues et disposées de telle sorte que la caméra peut détecter un signal de la lumière monochrome (r1, r2') avec laquelle la source d'éclairage (3) éclaire une vitre (2).

2. Dispositif selon la revendication 1, la caméra étant disposée derrière une vitre (2) et étant focalisée sur une zone distante se trouvant devant la vitre (2).

3. Dispositif selon la revendication 2, la source d'éclairage (3) pour la génération de lumière monochrome dirigeant au moins un faisceau lumineux monochrome (h) sur la vitre (2) de telle sorte qu'au moins un faisceau (r2') réfléchi par le côté extérieur (2.2) de la vitre (2) atteint le capteur d'images (5) de la caméra.

4. Dispositif selon la revendication 3, l'au moins un faisceau (r2') réfléchi par le côté extérieur (2.2) de la vitre (2) atteint le capteur d'images (5) de la caméra sans que des faisceaux (r1) étant réfléchis sur le côté intérieur (2.1) de la vitre (2) lui soient superposés.

5. Dispositif selon la revendication 3 ou 4, la source d'éclairage (3) dirigeant l'au moins un faisceau lumineux monochrome (h) sur la vitre (2) de telle sorte que les faisceaux réfléchis par le côté intérieur (2.1) et par le côté extérieur (2.2) de la vitre atteignent le capteur d'images (5) de la caméra comme au moins deux faisceaux séparés spatialement (r1 et r2').

6. Dispositif selon l'une quelconque des revendications précédentes, des filtres de transmission dans deux couleurs primaires différentes étant prévus comme filtres de couleurs pour les pixels du capteur d'images (5).

7. Dispositif selon la revendication 6, les filtres de transmission étant prévus dans les deux couleurs primaires rouge (R) et bleu (B).

8. Dispositif selon l'une quelconque des revendications précédentes, les filtres de couleurs pour les pixels du capteur d'images (5) étant des filtres de transmission pour les trois couleurs primaires rouge (R), vert (V) et bleu (B).

9. Dispositif selon la revendication 7 ou 8,
la source d'éclairage (3) générant de la lumière (h) dans la gamme de longueurs d'onde bleue.

10. Dispositif selon la revendication 8, la source d'éclairage (3) générant de la lumière (h) dans la gamme de longueurs d'onde verte.

11. Dispositif selon l'une quelconque des revendications précédentes, la caméra (1) comprenant un filtre anti-infrarouge, de telle sorte que le capteur d'images (5) ne peut pas détecter de lumière infrarouge.

12. Procédé pour la détection de pluie (4) avec une caméra (1), la caméra comprenant un capteur d'images et des filtres de couleurs pour des pixels du capteur d'images dans plusieurs couleurs primaires de filtre (R ; V ; B), les couleurs primaires de filtre (R ; V ; B) se trouvant dans la gamme de longueurs d'ondes visible,
de la lumière monochrome (h) étant générée par une source d'éclairage (3) se trouvant dans la gamme de longueurs d'ondes visible, laquelle est transmise par la première couleur primaire de filtre et est bloquée par les autres couleurs primaires de filtre, et une vitre (2) étant éclairée par la lumière monochrome (h) de telle sorte que la caméra peut détecter un signal de cette lumière monochrome (r1, r2').

13. Procédé selon la revendication 12,
la luminosité d'un premier pixel de capteur d'images de la première couleur primaire de filtre étant calculée,
les luminosités des pixels entourant le premier pixel de capteur d'images et présentant une autre couleur que la première couleur de pixel de filtre étant calculées, et une luminosité de fond du premier pixel de capteur d'images étant déterminée à partir de la luminosité des pixels entourant le premier pixel de capteur d'images et présentant une autre couleur que la première couleur de pixel de filtre.

14. Procédé selon la revendication 12 ou 13, une valeur moyenne des luminosités des pixels entourant le premier pixel de capteur d'images et présentant une autre couleur que la première couleur de pixel de filtre étant calculée pour la détermination de la luminosité de fond.

15. Procédé selon l'une quelconque des revendications 12 à 14, les luminosités des pixels environnants présentant une deuxième couleur primaire de filtre étant pondérées différemment que les luminosités des pixels environnants présentant une troisième couleur primaire de filtre pour la détermination de la luminosité de fond, afin de prendre en compte une certaine distribution spectrale du fond.

16. Procédé selon la revendication 14 ou 15, seule la composante chromatique de la première couleur primaire de filtre étant déduite de la luminosité du premier pixel de capteur d'images (de la première couleur primaire de filtre) calculée, parmi la valeur moyennée ou pondérée de la luminosité des pixels environnants.

17. Procédé selon l'une quelconque des revendications 12 à 16, une normalisation d'un signal de mesure actuel ajusté au niveau du fond étant exécutée par rapport à un signal de mesure ajusté au niveau du fond sur une vitre (2) sèche.
